# EUROPEAN PATENT SPECIFICATION

(11) **EP 2 710 313 B1**
(45) Date of publication and mention of the grant of the patent: **14.06.2017**
(21) Application number: 12716994.4
(22) Date of filing: 17.04.2012
(51) Int. Cl.: F25B 41/00, F25D 17/06

(54) **METHOD AND APPARATUS FOR AIRCRAFT GALLEY COOLING**
METHODE UND VORRICHTUNG ZUR KÜHLUNG DER FLUGZEUGBORDKÜCHE
PROCÉDÉ ET APPAREIL DE REFROIDISSEMENT D'UN OFFICE D'AVION

(30) Priority: 17.05.2011 US 201113109693
(43) Date of publication of application: 26.03.2014
(73) Proprietor: The Boeing Company, Chicago, IL 60606-1596 (US)
(72) Inventor: MILLAR, Rodney, Mukilteo, Washington 98275 (US); MACKIN, Steve G., Bellevue, Washington 98005 (US)
(74) Representative: Morrall, Jonathan Ian McLachlan
(86) International application number: PCT/US2012/033963
(87) International publication number: WO 2012/158297

(56) References cited:
- EP-A1- 0 655 593
- EP-A1- 1 849 704
- EP-A2- 0 940 336
- US-A- 4 869 071
- US-A1- 2005 061 012
- US-A1- 2008 196 442
- US-A1- 2009 260 387

## Description

### BACKGROUND

The present invention relates to a configurable cooling apparatus, and more specifically to a heat exchanger circuit for use in cooling one or more aircraft galley monuments.

Galleys in private or commercial aircraft are very common. These areas store food and beverages for aircraft passengers on long flights and have become a staple of the airline industry. These galleys often incorporate parking areas (or galley cooling units) where a food transport cart can be stored. The galley cooling units include a cooling element for keeping the food at a temperature lower than the surrounding environment.

One method of providing cooling to these galley cooling units is the use of a central aircraft cooling line that provides cooling throughout the aircraft and a heat exchanger between the central aircraft cooling line and the galley cooling unit. A fan module may also be provided for circulating the cool air into or over the galley cooling unit to provide cooling.

The central aircraft cooling line contains a fluid which may have a high specific heat, that is, the fluid is able to absorb large amounts of heat without a significant change in temperature. This allows the fluid of the central aircraft cooling line to maintain a relatively stable temperature while absorbing heat from multiple locations.

The central aircraft cooling line is typically a closed system where the cooling fluid (or coolant) is cycled through the cooling line to draw heat from various components. Therefore, whatever heat is absorbed by the coolant must be extracted to maintain cooling.

The central aircraft cooling line is currently cooled by use of a phase change circuit that utilizes a refrigerant in a separate and closed evaporator/condenser fluid line to cool the central aircraft cooling line, and therefore the coolant contained therein. This process is well known to those in the art and generally includes a compressor for compressing a gas, a condenser for converting the gas into a liquid, and an evaporator for converting the liquid into a gas to thereby draw heat from the surrounding environment.

The compressor of a phase change cooling circuit produces heat in excess of that absorbed by the evaporator and this heat is dissipated through the condenser. As the gas is condensed into a liquid, heat is released and preferably removed by means of a tertiary closed-circuit cooling line.

The tertiary closed-circuit cooling line generally cycles between a first heat exchanger a second heat exchanger. The first heat exchanger is in thermal communication with the tertiary line and the condenser and the second heat exchanger is in thermal communication with the tertiary line and the ram air. Ram air is air that is drawn from the boundary layer (or near boundary layer) of the outside of the aircraft and passed through a heat exchanger matrix. Ram air at approximately 35,000 feet is typically -55° C (-67° F), and may vary by up to 20° C (36° F) depending on weather conditions.

The current method of providing cooling to the galley cooling units requires a number of phase change coolers to provide adequate cooling for the central aircraft cooling line. A cooling method and apparatus that would remove one or more of the phase change coolers would reduce the weight of the aircraft and improve efficiency.

US 2009/260387 discloses a cooling system for an aircraft having a refrigerant system to cool a second fluid to be cooled by the refrigerant under a first set of conditions, and to route the second fluid to be cooled by ambient air from outside of the aircraft under a second set of conditions.

### SUMMARY

According to an aspect there is provided an apparatus for aircraft galley cooling as defined in claim 1. According to a second aspect there is provided a method of regulating temperature in a central aircraft cooling line as defined in claim 6.

Described herein is a novel method for cooling the galley of an aircraft. The method includes the steps of providing a preferred temperature for a cooling line, and the cooling line includes a coolant, a heat source, a phase change cooler, and a heat exchanger. Heat from the heat source is collected by means of the coolant which is then transferred to the heat exchanger. The heat is transferred from the heat exchanger to the air source and the output temperature of the coolant from the heat source is determined. If the output temperature is higher than the preferred temperature, than the phase change cooler is engaged to provide supplemental cooling of the coolant.

Also described herein is an apparatus for aircraft galley cooling. The apparatus comprises a central cooling line having a preferred temperature and a galley cooling unit. The cooling line further includes a phase change cooling system, a ram heat exchanger and a galley heat exchanger in thermal communication with the galley monument. If an output temperature of the heat exchanger is less than or equal to the preferred temperature, then the phase change cooling system may be disengaged.

Also described herein is a method for regulating temperature in a central aircraft cooling line. The method includes the steps of providing a phase change cooling system and a heat exchanger, both in thermal communication with the central aircraft cooling line. The heat loss through the heat exchanger is determined and the phase change cooling system is selectively engaged or disengaged based on this heat loss.

### BRIEF DESCRIPTION OF DRAWINGS

Fig. 1 shows a view of an aircraft according to one embodiment of the invention.
Fig. 2 shows a schematic view of the cooling system according to one embodiment.
Fig. 3 shows a schematic view of a phase change cooler according to one embodiment.
Fig. 4 shows a top plan view of a heat exchanger.
Fig. 5 shows a schematic view of a galley cooling unit according to the present invention.
Fig. 6 shows a schematic view of the cooling system according to an alternative embodiment.
Fig. 7 shows a flowchart according to one embodiment of the invention.

### DETAILED DESCRIPTION

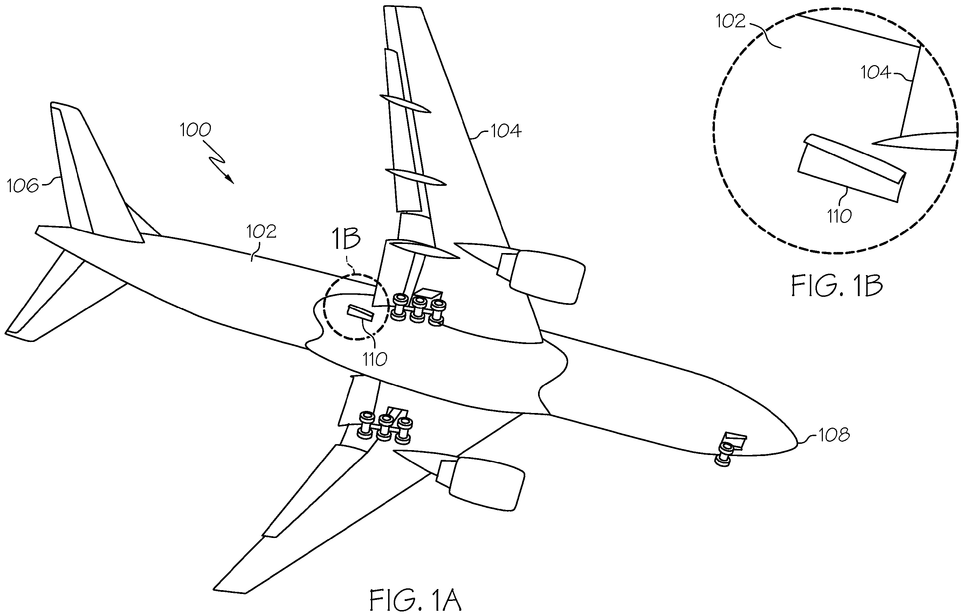

Fig. 1 shows an illustration of an aircraft 100 according to one embodiment of the present invention. The aircraft generally consists of fuselage 102, wings 104, tail, 106, and nose 108 sections. Further, a ram air intake 110 is located on the aircraft fuselage 102 which provides air cooling.

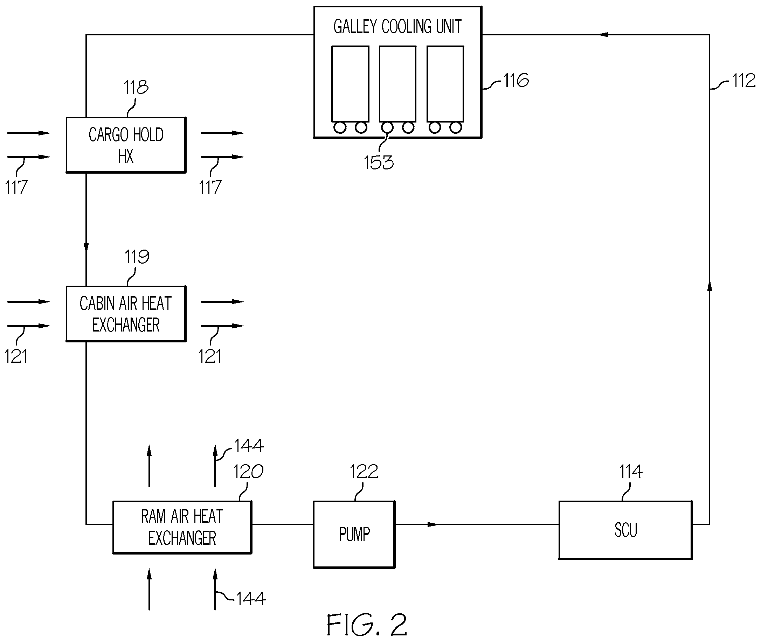

Fig. 2 shows a schematic view of the central aircraft cooling line 112 that provides cooling throughout the aircraft 100. The central aircraft cooling line 112 is a continuous closed circuit, but will generally be described as originating at a phase change cooling system 114. The central aircraft cooling line 112 may then pass to the aft section of the circuit where it interacts with the various galley cooling units 116. The central aircraft cooling line 112 may next pass through a cargo hold heat exchanger 118 to cool cargo air 117 and a cabin air heat exchanger 119 to cool cabin air 121. Finally, the central aircraft cooling line 112 is run through a ram air heat exchanger 120 and through a pump 122 before returning to the phase change cooling system 114 where heat is extracted.

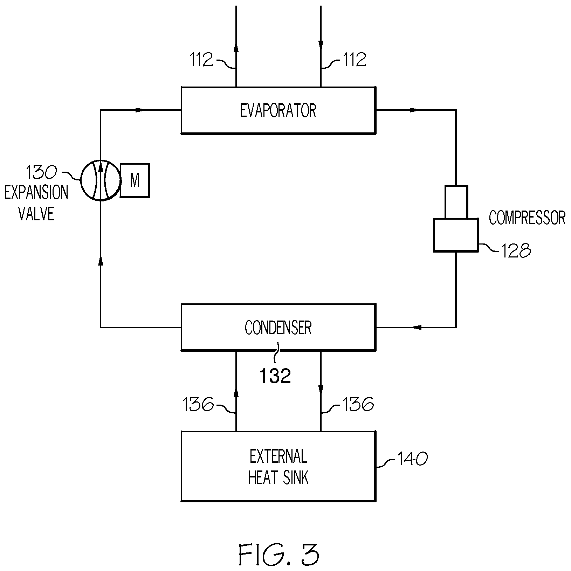

The phase change cooling system 114 is generally shown in Fig. 3 and consists of a closed refrigerant line 124, evaporator 126, compressor 128, expansion valve 130 and condenser 132. As is well known in the art, a phase change cooling system 114 generally operates by compressing a gas by means of the compressor 128; dissipating heat from the gas through a condenser 132, thereby causing the gas to condense into a fluid; passing the fluid through an expansion valve 130; and allowing the gas to expand in an evaporator 126, thereby drawing heat from the surrounding area into the fluid of the closed refrigerant line 124.

As further shown in Fig. 3, the evaporator 126 may be adjacent to a heat exchanger matrix 134 that is part of the central aircraft coolant line 112. As the refrigerant in the closed refrigerant line 124 evaporates, heat will be drawn from the heat exchanger matrix 134 of the central aircraft coolant line 112. The winding path of the heat exchanger matrix 134 and evaporator 126 maximizes heat transfer between the two closed systems.

Further shown in Fig. 3, adjacent to the condenser 132 may be a secondary cooling line 136 which includes a secondary cooling heat exchanger matrix 138 in thermal communication with the condenser 132. As will be appreciated by those having skill in the art, the secondary cooling heat exchanger matrix 138 includes a winding path to maximize heat transfer between the condenser 132 and the secondary cooling heat exchanger matrix 138. This secondary cooling line 136 therefore carries heat away from the condenser 132.

As further shown in Fig. 2, a number of phase change cooling units 114 may be positioned in series, where each unit 114 reduces the temperature in the central aircraft cooling line 112. According to this arrangement, the output from each heat exchanger matrix 134 would be in fluid communication with the input of the next heat exchanger matrix 134 so that the fluid of the central aircraft cooling line 112 is progressively reduced. Alternatively, although not shown, the phase change cooling units 114 may be provided in parallel, whereby each cooling unit 114 cools a portion of the central aircraft cooling line 112.

As further shown in Fig. 3, the secondary cooling line 136 draws heat from the condensers 132 of the phase change cooling units 114. The secondary cooling line 136 is shown to engage the cooling units 114 in parallel so that the temperature of the secondary cooling line 136 may be approximately equal across each condenser 132. Alternatively, the secondary cooling line 136 may be arranged so that the condensers 132 are in series.

As further shown in Fig. 2, according to one embodiment of the invention the secondary cooling line 136 is in thermal communication with an external heat sink 140. This external heat sink 140 may be a ram air heat exchanger positioned in a pack bay of the aircraft 100, or may consist of a secondary line and heat exchanger.

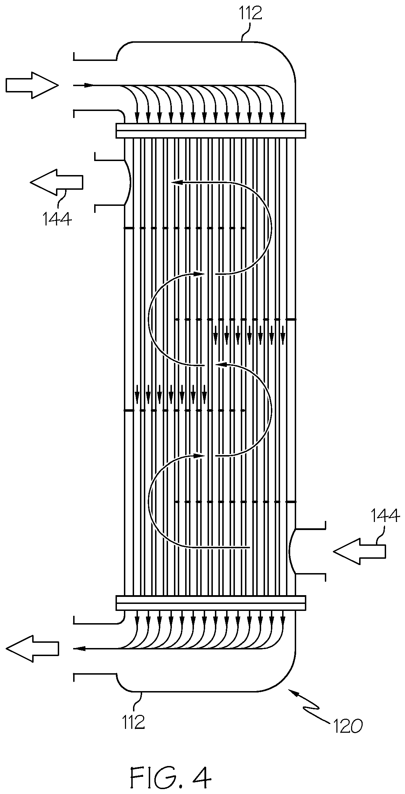

As shown in Fig. 4, the ram heat exchanger 120 generally consists of a serpentine shape in thermal communication with ram air 144 that is passed over the heat exchanger 120. The ram air 144 draws heat from the central aircraft cooling line 112 by means of this thermal communication.

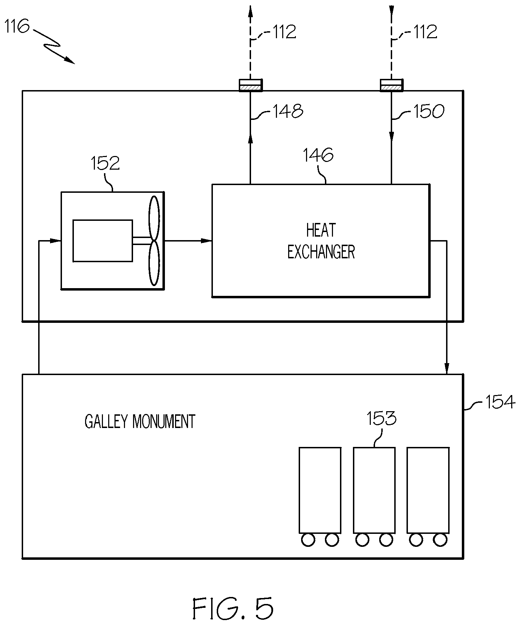

Returning to Fig. 2, the central aircraft cooling line 112 may include a number of galley cooling units 116 arranged in parallel with one another. These cooling units 116 are further illustrated in Fig. 5. Those skilled in the art will appreciate that the galley cooling units may be alternatively arranged in series, or in an arrangement combining parallel and series.

As shown in Fig. 5, the galley cooling unit 116 generally includes a galley heat exchanger 146 with both an input 148 and output 150. As with previous heat exchangers, the galley heat exchanger 146 includes a serpentine construction. Also shown is an optional fan module 152 that circulates air into and out from the area adjacent a number of galley carts 153 . There may also be present temperature sensors 154 that measure the temperature of the air as it is cycled over the carts 153 and returned. This provides feedback to a control system (not shown) so that the temperature of the food can be regulated.

Returning again to Fig. 2, the central aircraft cooling line 112 may include a cargo hold heat exchanger 118 which may transfer heat to or from the air of the cargo hold, depending on the relative temperatures of the cargo hold air and aircraft cooling line 112. This cargo hold heat exchanger 118 is substantially similar to the heat exchangers described above.

Finally, the central aircraft cooling line 112 is passed through the ram heat exchanger 120 which includes a serpentine arrangement similar to heat exchangers previously described. Heat is drawn from the ram heat exchanger 120 by means of ram air 144 that passes over the heat exchanger 120. This ram air is significantly cold at altitude (for example, -55° C at 35,000 feet) to provide sufficient cooling for the cold air system.

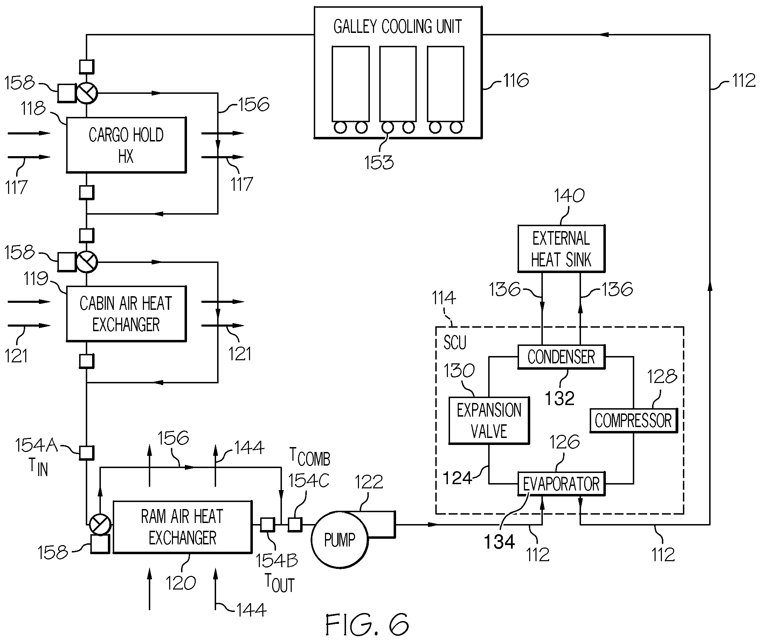

As shown in Fig. 6, each of the heat exchangers 118, 120 may include a bypass path 156 and diverter valve 158 that allows flow of coolant to be diverted around the heat exchangers 118, 120. The diverter valve 158 may be configured to divert some or all of the fluid around the heat exchanger, thereby regulating the temperature of the fluid. Temperature sensors 154 can measure the temperature of the un-cooled fluid (A), the cooled fluid (B) and the combined fluid (C) and regulate the position of the diverter valve 158 to control the temperature in the line 112.

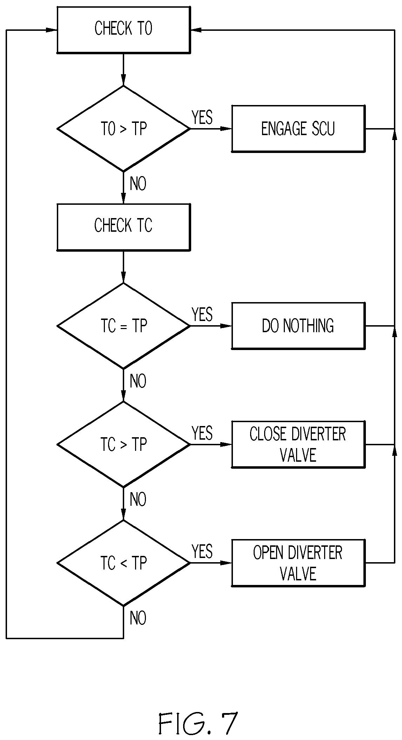

The system is preferably automated to maintain a preferred temperature within the system. Because of the electrical draw and increased heat generated by the phase change coolers 114, it is desirable to reduce the time that these systems are in use. Therefore, a system as illustrated in the flowchart of Fig. 7 may be utilized to improve the system.

As shown in Fig. 7, the first step in regulating the temperature of the central aircraft cooling line 112 is to determine the fluid temperature entering (T_{IN}) and leaving [(T_{OUT}) =TO in figure 7], the ram air heat exchanger 120. This information can be used to determine the amount of heat removed from the cooling line 112 by the ram air heat exchanger 120 based on the difference between these temperatures, flow rate through the cooling line 112, and specific heat of the coolant, which are all known variables.

The output temperature (T_{OUT}) of the ram heat exchanger 120 is next compared against a known preferred temperature [(T_{PREF})=TP in figure7] of the cooling line. This preferred temperature (T_{PREF}) may be a constant or determined based on the amount of cooling required. For example, if fewer galley cooling units 116 are in use, the temperature of the central aircraft cooling line 112 does not need to be as cool as less heat is being introduced into the line 112. The preferred temperature (T_{PREF}) is typically within a range from a minimum preferred temperature (T_{MIN}) to a maximum preferred temperature (T_{MAX}). When a temperature is referred to as "equal to" the preferred temperature (T_{PREF)}, this means that the temperature is within the acceptable range between the minimum (T_{MIN}) and maximum (T_{MAX}) preferred temperatures. A temperature referred to as "below" or "lower than" the preferred temperature (T_{PREF}) is a temperature that is below the minimum preferred temperature (T_{MIN}). A temperature referred to as "above" or "higher than" the preferred temperature (T_{PREF}) is a temperature that is above the maximum preferred temperature (T_{MAX}).

If the output temperature (T_{OUT}) of the ram heat exchanger 120 is above the preferred temperature (T_{PREF}), then the ram heat exchanger 120 is not dissipating enough heat to cool the central aircraft cooling line 112 on its own, and supplemental cooling from the phase change coolers 114 must be introduced. Based on the temperature difference between the ram heat exchanger 120 output (T_{OUT}) and the preferred temperature (T_{PREF}), one or more phase change coolers 114 may be engaged to produce the desired cooling. Alternatively, phase change coolers 114 may be engaged in sequence to progressively step down the temperature in the central aircraft cooling line 112.

The output temperature (T_{OUT}) of the ram heat exchanger 120 may also be below the preferred temperature (T_{PREF}) for the central aircraft cooling line 112. In this case, the phase change coolers 114 do not need to be engaged, and control of the system will shift to the temperature sensor 154 that measures the combined temperature [(T_{COMB})=TC in figure 7].

The combined temperature (T_{COMB}) is the temperature of the fluid from the ram heat exchanger 120 and bypass path 156 modified by the proportion diverted by the diverter valve 158. The combined temperature (T_{COMB}) may be modified by adjusting the diverter valve 158 to allow more or less flow through the bypass path 156. The fluid flowing through the bypass path 156 maintains the same high temperature (T_{OUT}) as the input fluid to the ram heat exchanger 120, and therefore is used to raise the temperature of the central aircraft heating line 112 to prevent the combined temperature (T_{COMB}) from falling below the preferred temperature (T_{PREF}).

The combined temperature (T_{COMB}) may be either lower than, equal to, or higher than the preferred temperature (T_{PREF}). If the combined temperature is below the preferred temperature (T_{PREF}), then the diverter valve 158 may be adjusted to increase the flow through the bypass path 156 so that the combined temperature (T_{COMB}) reaches the preferred temperature (T_{PREF}). This is preferably maintained by a positive feedback control system that monitors and adjusts the diverter valve 158 to maintain the preferred temperature (T_{PREF}).

If the combined temperature (T_{COMB}) is higher than the preferred temperature (T_{PREF}) (and the output temperature (T_{OUT}) is less than the preferred temperature (T_{PREF})), then the diverter valve 158 must be adjusted to reduce the flow through the bypass path 156 to thereby reduce the temperature (T_{COMB}) of the combined fluid.

If the combined temperature (T_{COMB}) is equal to the preferred temperature (T_{PREF}) (and the output temperature (T_{OUT}) is less than the preferred temperature (T_{PREF})), then the flow through the bypass path 156 is appropriate and should be maintained.

It may be appreciated by those having skill in the art that the bypass path 156 and diverter valve 158 may be combined with any of the heat exchanger matrices in the above described system, and a control system may be devised to monitor input, output, and combined temperatures within the central aircraft cooling line 112. For example, sensors (not shown) may detect the temperature or presence of galley carts 153 in one or more of the galley cooling units 116 and selectively allow flow through the heat exchanger 146 of the galley cooling unit 116 to conserve energy.

The invention has been described as utilizing a ram heat exchanger in communication with an exterior air source to provide heat transfer from the central cooling line. However, the ram heat exchanger may be replaced with any heat exchanger in thermal communication with outside air. One example of such a heat exchanger is a series of cooling lines adjacent or near the skin of the aircraft that utilize conduction to transfer heat from the cooling line to the aircraft skin and then to the outside air.

The invention has been generally described with respect to a preferred embodiment. This embodiment is intended to be exemplary rather than limiting. Further, those skilled in the art will recognize that various modifications of the described embodiment may be made without departing from the scope of the invention. Any limitations will appear in the claims as allowed.

## Claims

1. An apparatus for aircraft galley cooling comprising:
a central cooling line (112) having a preferred temperature and including:
a phase change cooling system (114),
a ram heat exchanger (120) in thermal communication with an atmosphere including an output temperature, and
a galley heat exchanger (146); and
a galley monument in thermal communication with said galley heat exchanger,
wherein said phase change cooling system is configured to be disengaged if said output temperature is less than or equal to said preferred temperature.

2. The apparatus of claim 1 further comprising a fan module (152) adjacent said galley heat exchanger (146), said fan module for aiding thermal communication between said galley heat exchanger and galley carts (153) within said galley monument.

3. The apparatus of claim 1 or 2 wherein said central cooling line (112) further includes a coolant.

4. The apparatus of claim 3 further comprising a bypass path (156) for diverting said coolant around said ram heat exchanger (120).

5. The apparatus of claim 4 further comprising a diverter valve (158) for transferring all or a portion of said coolant through said bypass path (156).

6. A method of regulating temperature in a central aircraft cooling line (112), the method comprising steps of:
providing a phase change cooling system (114) in thermal communication with said central aircraft cooling line;
providing a heat exchanger (120) in thermal communication with an exterior of an aircraft (100) and said central aircraft cooling line;
determining a heat loss through said heat exchanger; and
selectively engaging or disengaging said phase change cooling system depending on said heat loss.

7. The method of claim 6 wherein the central aircraft cooling line (112) includes a heat source, the method further comprising the step of determining a heat gain through said heat source.

8. The method of claim 7 further comprising determining a net heat gain based on said heat loss and said heat gain.

9. The method of claim 8 wherein said phase change cooling system (114) comprises a plurality of phase change coolers.

10. The method of claim 9 further comprising:
engaging one or more of said plurality of phase change coolers if said net heat gain is positive; and
diverting a portion of said coolant around said heat exchanger (120) if said net heat gain is negative.

11. The method of claim 6 wherein the cooling line (112) includes a coolant, a heat source, and a phase change cooler (114), the method further comprising:
drawing heat from said heat source with said coolant;
transferring said coolant to said heat exchanger (120);
transferring said heat from said coolant to said exterior of the aircraft;
determining an output temperature of said coolant as it exits said heat exchanger; and
engaging said phase change cooler if said output temperature is higher than a preferred temperature.

12. The method of claim 11 wherein said heat source is a galley heat exchanger (146) in thermal communication with a galley.

13. The method of claim 11 or 12 wherein said cooling line (112) further includes a diverter valve (158), the method further comprises:
diverting a first portion of said coolant through a bypass path (156) and a second portion of said coolant through said heat exchanger (120), and
combining said first and second portions of coolant after said second portion passes through said heat exchanger.

14. The method of claim 13 wherein said preferred temperature comprises a range between a minimum preferred temperature and a maximum preferred temperature.

15. The method of claim 14 further including the step of adjusting the diverter valve (158) to maintain said preferred temperature.

## Patentansprüche

1. Vorrichtung zum Kühlen der Bordküche eines Luftfahrzeugs, aufweisend:
eine zentrale Kühlleitung (112) mit einer bevorzugten Temperatur und beinhaltend:
ein Phasenwechsel-Kühlsystem (114),
einen Stauwärmetauscher (120) in thermischer Verbindung mit einer Atmosphäre, die eine Ausgabetemperatur beinhaltet, und
einen Bordküchen-Wärmetauscher (146); und
einen Bordküchenaufbau in thermischer Verbindung mit dem Bordküchen-Wärmetauscher,
wobei das Phasenwechsel-Kühlsystem dafür konfiguriert ist, gelöst zu werden, wenn die Ausgabetemperatur niedriger als die oder gleich der bevorzugte(n) Temperatur ist.

2. Vorrichtung nach Anspruch 1, des Weiteren aufweisend ein Ventilatormodul (152), benachbart zum Bordküchen-Wärmetauscher (146), wobei das Ventilatormodul zum Unterstützen der thermischen Verbindung zwischen dem Bordküchen-Wärmetauscher und Bordküchenwägen (153) im Bordküchenaufbau vorgesehen ist.

3. Vorrichtung nach Anspruch 1 oder 2, wobei die zentrale Kühlleitung (112) des Weiteren ein Kühlmittel beinhaltet.

4. Vorrichtung nach Anspruch 3, des Weiteren aufweisend einen Umgehungsweg (156) zum Umleiten des Kühlmittels um den Stauwärmetauscher (120).

5. Vorrichtung nach Anspruch 4, des Weiteren aufweisend ein Umleiterventil (158) zum Übertragen des ganzen oder eines Teils des Kühlmittels durch den Umgehungsweg (156).

6. Verfahren zum Regeln der Temperatur in einer zentralen Kühlleitung (112) eines Luftfahrzeugs, wobei das Verfahren die folgenden Schritte aufweist:
Bereitstellen eines Phasenwechsel-Kühlsystems (114) in thermischer Verbindung mit der zentralen Kühlleitung des Luftfahrzeugs;
Bereitstellen eines Wärmetauschers (120) in thermischer Verbindung mit einem Äußeren eines Luftfahrzeugs (100) und der zentralen Kühlleitung des Luftfahrzeugs;
Bestimmen eines Wärmeverlusts durch den Wärmetauscher; und
selektives Eingliedern oder Lösen des Phasenwechsel-Kühlsystems abhängig vom Wärmeverlust.

7. Verfahren nach Anspruch 6, wobei die zentrale Kühlleitung (112) des Luftfahrzeugs eine Wärmequelle beinhaltet, wobei das Verfahren des Weiteren den Schritt des Bestimmens einer Wärmezunahme durch die Wärmequelle aufweist.

8. Verfahren nach Anspruch 7, des Weiteren aufweisend das Bestimmen einer Netto-Wärmezunahme auf der Grundlage des Wärmeverlusts und der Wärmezunahme.

9. Verfahren nach Anspruch 8, wobei das Phasenwechsel-Kühlsystem (114) eine Mehrzahl von Phasenwechsel-Kühlern aufweist.

10. Verfahren nach Anspruch 9, des Weiteren aufweisend:
Eingliedern von einem oder mehreren der Mehrzahl von Phasenwechsel-Kühlern, wenn die Netto-Wärmezunahme positiv ist; und
Umleiten eines Teils des Kühlmittels um den Wärmetauscher (120), wenn die Netto-Wärmezunahme negativ ist.

11. Verfahren nach Anspruch 6, wobei die Kühlleitung (112) ein Kühlmittel, eine Wärmequelle und einen Phasenwechsel-Kühler (114) beinhaltet, wobei das Verfahren des Weiteren aufweist:
Entziehen von Wärme aus der Wärmequelle mit dem Kühlmittel;
Übertragen des Kühlmittels an den Wärmetauscher (120);
Übertragen der Wärme vom Kühlmittel an das Äußere des Luftfahrzeugs;
Bestimmen einer Ausgabetemperatur des Kühlmittels, wenn es aus dem Wärmetauscher austritt; und
Eingliedern des Phasenwechsel-Kühlers, wenn die Ausgabetemperatur höher als eine bevorzugte Temperatur ist.

12. Verfahren nach Anspruch 11, wobei die Wärmequelle ein Bordküchen-Wärmetauscher (146) in thermischer Verbindung mit einer Bordküche ist.

13. Verfahren nach Anspruch 11 oder 12, wobei die Kühlleitung (112) des Weiteren ein Umleiterventil (158) beinhaltet, wobei das Verfahren des Weiteren aufweist:
Umleiten eines ersten Teils des Kühlmittels durch einen Umgehungsweg (156) und eines zweiten Teils des Kühlmittels durch den Wärmetauscher (120), und
Kombinieren des ersten und des zweiten Teils des Kühlmittels, nachdem der zweite Teil durch den Wärmetauscher strömt.

14. Verfahren nach Anspruch 13, wobei die bevorzugte Temperatur einen Bereich zwischen einer minimalen bevorzugten Temperatur und einer maximalen bevorzugten Temperatur umfasst.

15. Verfahren nach Anspruch 14, des Weiteren beinhaltend den Schritt des Einstellens des Umleiterventils (158), um die bevorzugte Temperatur aufrechtzuerhalten.

## Revendications

1. Dispositif pour refroidissement d'office d'aéronef, comprenant :
une ligne de refroidissement central (112) ayant une température préférée et comportant :
un système de refroidissement avec changement de phase (114),
un échangeur de chaleur de bélier (120) en communication thermique avec une atmosphère comportant une température de sortie, et
un échangeur de chaleur d'office (146) ; et
un monument d'office en communication thermique avec ledit échangeur de chaleur d'office,
dans lequel ledit système de refroidissement avec changement de phase est configuré pour être désengagé si ladite température de sortie est inférieure ou égale à ladite température préférée.

2. Dispositif selon la revendication 1, comprenant en outre un module de ventilateur (1 52) adjacent audit échangeur de chaleur d'office (146), ledit module de ventilateur étant destiné à aider la communication thermique entre ledit échangeur de chaleur d'office et des chariots d'office (153) à l'intérieur dudit monument d'office.

3. Dispositif selon la revendication 1 ou 2, dans lequel ladite ligne de refroidissement central (112) comporte en outre un liquide de refroidissement.

4. Dispositif selon la revendication 3, comprenant en outre un chemin de dérivation (156) destiné à dévier ledit liquide de refroidissement autour dudit échangeur de chaleur de bélier (120).

5. Dispositif selon la revendication 4, comprenant en outre un inverseur (158) destiné à transférer tout ou partie dudit liquide de refroidissement à travers ledit chemin de dérivation (1 56).

6. Procédé de régulation de la température dans une ligne de refroidissement central d'aéronef (112), le procédé comprenant les étapes consistant à :
fournir un système de refroidissement avec changement de phase (114) en communication thermique avec ladite ligne de refroidissement central d'aéronef ;
fournir un échangeur de chaleur (120) en communication thermique avec un extérieur d'un aéronef (100) et ladite ligne de refroidissement central d'aéronef ;
déterminer une perte de chaleur à travers ledit échangeur de chaleur ; et
engager ou désengager sélectivement ledit système de refroidissement avec changement de phase en fonction de ladite perte de chaleur.

7. Procédé selon la revendication 6, dans lequel la ligne de refroidissement central d'aéronef (112) comporte une source de chaleur, le procédé comprenant en outre l'étape consistant à déterminer un apport de chaleur à travers ladite source de chaleur.

8. Procédé selon la revendication 7, consistant en outre à déterminer un apport de chaleur net sur la base de ladite perte de chaleur et dudit apport de chaleur.

9. Procédé selon la revendication 8, dans lequel ledit système de refroidissement avec changement de phase (114) comprend une pluralité de refroidisseurs avec changement de phase.

10. Procédé selon la revendication 9, consistant en outre à :
engager un ou plusieurs de ladite pluralité de refroidisseurs avec changement de phase si ledit apport de chaleur net est positif ; et
dévier une partie dudit liquide de refroidissement autour dudit échangeur de chaleur (120) si ledit apport de chaleur net est négatif.

11. Procédé selon la revendication 6, dans lequel la ligne de refroidissement (112) comporte un liquide de refroidissement, une source de chaleur, et un refroidisseur avec changement de phase (114), le procédé consistant en outre à :
prélever la chaleur de ladite source de chaleur avec ledit liquide de refroidissement ;
transférer ledit liquide de refroidissement vers ledit échangeur de chaleur (120) ;
transférer ladite chaleur provenant dudit liquide de refroidissement vers ledit extérieur de l'aéronef ;
déterminer une température de sortie dudit liquide de refroidissement lorsqu'il sort dudit échangeur de chaleur ; et
engager ledit refroidisseur avec changement de phase si ladite température de sortie est supérieure à une température préférée.

12. Procédé selon la revendication 11, dans lequel ladite source de chaleur est un échangeur de chaleur d'office (146) en communication thermique avec un office.

13. Procédé selon la revendication 11 ou 12, dans lequel ladite ligne de refroidissement (112) comporte en outre un inverseur (1 58), le procédé consistant en outre à :
dévier une première partie dudit liquide de refroidissement à travers un chemin de dérivation (1 56) et une seconde partie dudit liquide de refroidissement à travers ledit échangeur de chaleur (120), et
combiner lesdites première et seconde parties de liquide de refroidissement après que ladite seconde partie ait traversé ledit échangeur de chaleur.

14. Procédé selon la revendication 13, dans lequel ladite température préférée comprend une plage comprise entre une température minimum préférée et une température maximum préférée.

15. Procédé selon la revendication 14, comprenant en outre l'étape consistant à régler l'inverseur (1 58) pour maintenir ladite température préférée.
